# EUROPEAN PATENT APPLICATION

(11) **EP 4 692 102 A1**
(43) Date of publication of application: **11.02.2026**
(21) Application number: 24779922.4
(22) Date of filing: 22.03.2024
(51) Int. Cl.: C07F 17/02

(54) **CRYSTALLINE ALCOHOLATE OF 2,2"-BIS[1-(DIPHENYLPHOSPHINO)ETHYL]-1,1"-BIFERROCENE AND METHOD FOR PRODUCING SAME**

(30) Priority: 24.03.2023 JP 2023048086
(71) Applicant: Takasago International Corporation, Tokyo 144-8721 (JP)
(72) Inventor: NAKAYAMA, Yuji, Hiratsuka-shi, Kanagawa 254-0073 (JP); SAKAGUCHI, Kazuhiko, Hiratsuka-shi, Kanagawa 254-0073 (JP)
(74) Representative: Hoffmann Eitle
(86) International application number: PCT/JP2024/011201
(87) International publication number: WO 2024/203803

(57) **Abstract**

The present invention relates to a product form having excellent crystallinity and air stability of 2,2"-bis[1-(diphenylphosphino)ethyl]-1,1"-biferrocene (Ph-TRAP) which is useful as an aromatic asymmetric hydrogenation ligand but is difficult to be synthesized or isolated and purified, and a method for efficiently producing the product form. The present invention provides: a crystalline alcoholate composed of Ph-TRAP and an alcohol; and a method for producing the crystalline alcoholate, the method comprising reacting Ph-TRAP(BH₃)₂ represented by general formula (1·(BH₃)₂) with an alcohol.

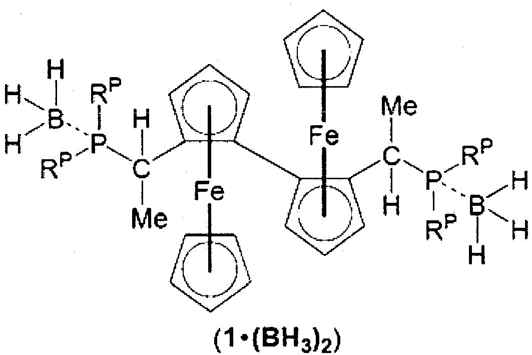

## Description

### Technical Field

The present invention relates to a novel crystalline alcohol solvate of 2,2"-bis[1-(diphenylphosphino)ethyl]-1,1"-biferrocene (Ph-TRAP), which is a diphosphine compound useful as a ligand for the asymmetric hydrogenation of aromatics, but is difficult to synthesize, isolate, or purify. The present invention also relates to an efficient production method of the alcohol solvate.

### Background Art

Optically active cyclic compounds are of great importance as pharmaceuticals, agrochemicals, functional materials, fragrances, and synthetic intermediates. Accordingly, intensive research and development efforts continue to be directed toward their production methods. Among such methods, the catalytic asymmetric hydrogenation of aromatic compounds or heteroaromatic compounds, referred to as the asymmetric hydrogenation of aromatics, offers several advantages, including the ability to simultaneously introduce multiple chiral carbon centers into a target molecule, as well as excellent atom economy and the potential for significant reduction of waste. Therefore, the asymmetric hydrogenation of aromatics is not only useful as the production method of optically active cyclic compounds, but has also become one of the particularly important catalytic reactions from the perspectives of recently emphasized SDGs and Green Chemistry.

For the practical application of the asymmetric hydrogenation of aromatics, it is essential to employ chiral ligands that are not only easy to produce but also exhibit excellent catalytic activity, asymmetric induction ability, substrate generality, and air stability. Accordingly, intensive efforts have been made over many years to develop such ligands. Among these ligands, 2,2"-bis[1-(diphenylphosphino)ethyl]-1,1''-biferrocene (commonly known as Ph-TRAP, Patent Literature 1 and Non Patent Literature 1), a rare trans-chelating diphosphine compound developed by Ito, Sawamura, and their colleagues in 1991, was later found by Kuwano and his colleagues in 2000 to function as a ligand for the asymmetric hydrogenation of aromatics, exhibiting particularly excellent substrate generality (Non Patent Literature 2).

For example, various aromatic compounds or heteroaromatic compounds such as naphthalenes, pyrroles, imidazoles, oxazoles, indoles, azaindoles, quinolines, and isoquinolines can be catalytically hydrogenated by using Ph-TRAP as a chiral ligand, enabling the highly efficient synthesis of optically active cyclic compounds (Non Patent Literatures 3 and 4). In light of this background, extensive research has also been conducted on the synthesis of Ph-TRAP, and a variety of synthesis methods have been reported to date (Non Patent Literatures 5 to 7) (for reference, the stereochemical structure of typical optically active forms of Ph-TRAP are shown in Formula 1 below, and a schematic diagram of the asymmetric hydrogenation of aromatics using the optically active Ph-TRAP as a chiral ligand is shown in Formula 2 below).

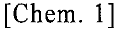

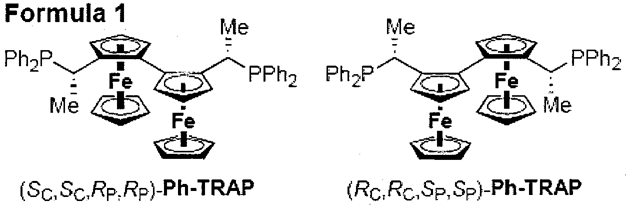

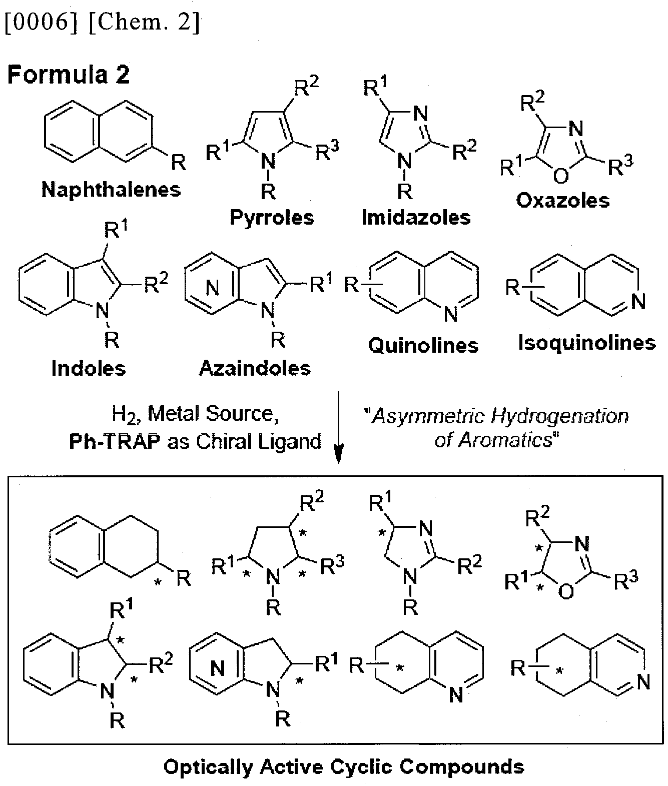

### Citation List

### Patent Literature

Patent Literature 1: JP-A-Hei-4-283596

### Non Patent Literature

Non Patent Literature 1: Masaya Sawamura, Hitoshi Hamashima, and Yoshihiko Ito, Tetrahedron Asymmetry, 1991, 7(2), 593-596.
Non Patent Literature 2: Ryoichi Kuwano, Koji Sato, Takashi Kurokawa, Daisuke Karube, and Yoshihiko Ito, J. Am. Chem. Soc., 2000, 122(31), 7614-7615.
Non Patent Literature 3: Ryoichi Kuwano, J. Synth. Org. Chem., Jpn., 2007, 65(2), 109-118.
Non Patent Literature 4: Ryoichi Kuwano, J. Synth. Org. Chem., Jpn., 2021, 79(12), 1125-1135.
Non Patent Literature 5: Masaya Sawamura, Hitoshi Hamashima, Masanobu Sugawara, Ryoichi Kuwano, and Yoshihiko Ito, Organometallics, 1995, 14(10), 4549-4558.
Non Patent Literature 6: Ryoichi Kuwano, and Masaya Sawamura, Catalysts for Fine Chemical Synthesis: Vol. 5, Regio- and Stereo-Controlled Oxidations and Reductions, Wiley, Chichester, 2007, 73-86. Non Patent Literature 7: Michael A. Schmidt, Eric M. Simmons, Carolyn S. Wei, Hyunsoo Park, and Martin D. Eastgate, J. Org. Chem., 2018, 83(7), 3928-3940.

### Summary of Invention

### Technical Problem

As mentioned above, Ph-TRAP is the diphosphine compound proven useful as a ligand for the asymmetric hydrogenation of aromatics, and various applied studies have been actively pursued to date. However, the conventional synthesis methods (Non Patent Literatures 5 to 7) still suffer from numerous critical drawbacks, as shown in Formula 3 below. Specifically, these methods require the use of industrially impractical reagents and solvents such as mutagenic iodomethane (Step 2), complicated to prepare and unstable lithium diphenylphosphinites (Step 3), various heavy metals including copper, nickel, and zinc (Step 4), trichlorosilane with complicated handling and post-treatment, and highly carcinogenic benzene (Step 5). Furthermore, Ph-TRAP synthesized by the conventional methods, must be purified by column chromatography using alumina and benzene and recrystallization from benzene and ethanol (Step 6), in order to remove impurities generated in Step 5. Moreover, the product form of Ph-TRAP is prone to becoming either an unstable amorphous substance or a highly toxic benzene solvate, thereby making the industrial production by the conventional synthesis methods extremely difficult.

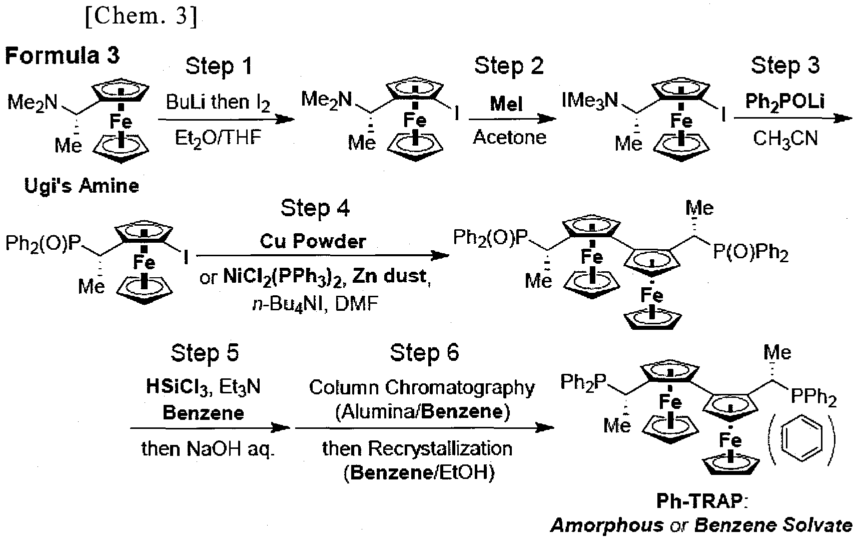

The present invention has been made in light of the foregoing circumstances. Specifically, the present invention provides a novel product form of Ph-TRAP and an efficient production method thereof, with a view to promoting the practical application and further optimization of the asymmetric hydrogenation of aromatics. More preferably, the present invention provides the product form of Ph-TRAP, which offers various advantages including: 1) easy production using reagents and solvents suitable for industrial use; 2) remarkable crystallinity and air stability; and 3) facile isolation, purification, and long-term storage; and provides the efficient production method thereof.

### Solution to Problem

The present inventors, while considering solutions to the aforementioned problems, focused on the well-known phenomenon that the reaction of phosphine compounds with a borane source leads to the formation of phosphine-borane complexes exhibiting excellent crystallinity and air stability. Thus, although the diphosphine compound Ph-TRAP is difficult to handle, its conversion into Ph-TRAP·(BH₃)₂, a previously unknown diphosphine-diborane complex, is expected to significantly improve its various physical properties. However, as shown in Formula 4 below, even if Ph-TRAP · (BH₃)₂ were to be formed by reacting a borane source with Ph-TRAP, whose synthesis is inherently difficult, the synthetic problems associated with the conventional methods would remain entirely unresolved. Therefore, to the best of the inventors' knowledge, no such attempt has ever been reported in the literature to date.

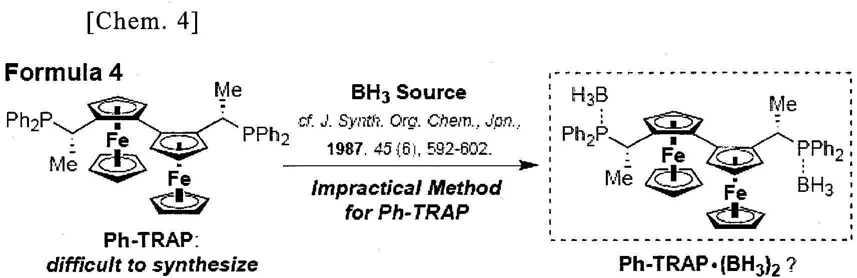

In light of the foregoing background, the inventors conducted extensive investigations. As a result, a novel method was established that enables the direct production of Ph-TRAP·(BH₃)₂, the diborane complex of Ph-TRAP, from commercially available N,N-dimethyl-1-ferrocenylethylamine (commonly known as Ugi's Amine), without using the synthetically challenging Ph-TRAP itself. This production method eliminates the need for industrially unsuitable reagents and solvents that posed challenges in the conventional synthesis methods, such as iodomethane, lithium diphenylphosphinite, various heavy metals, trichlorosilane, and benzene. In addition, the novel Ph-TRAP·(BH₃)₂ obtained by the present method, exhibited excellent crystallinity and air stability, as expected, and was found to be readily isolable and purifiable (for reference, the outline of the production method of optically active Ph-TRAP·(BH₃)₂ is shown in Formula 5 below, but the present invention is not limited thereto).

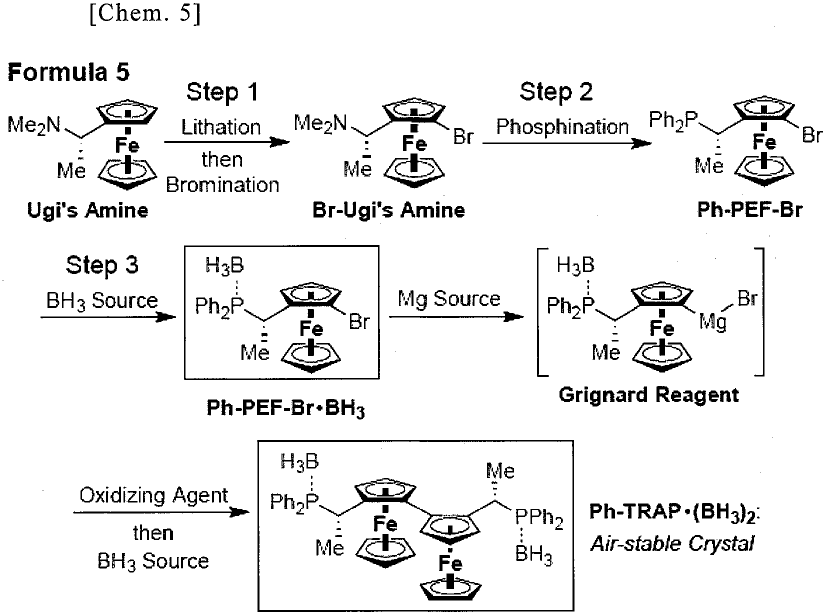

Based on the above findings, the inventors continued their investigations and, quite unexpectedly, discovered the following: 1) Ph-TRAP·(BH₃)₂ can be readily converted into Ph-TRAP by heating and stirring it in n-butyl alcohol (n-BuOH); and 2) Ph-TRAP crystallizes simply by cooling the resulting reaction solution. Accordingly, the resulting crystals were collected from the reaction solution and subjected to detailed analysis. To the inventors' great surprise, 3) the crystals were identified as a novel alcohol solvate, Ph-TRAP·n-BuOH, which exhibits remarkable stability in air. Building upon these fundamental discoveries, the inventors conducted further studies and completed the present invention (for reference, the outline of the production method of Ph-TRAP-n-BuOH is shown in Formula 6 below, but the present invention is not limited thereto).

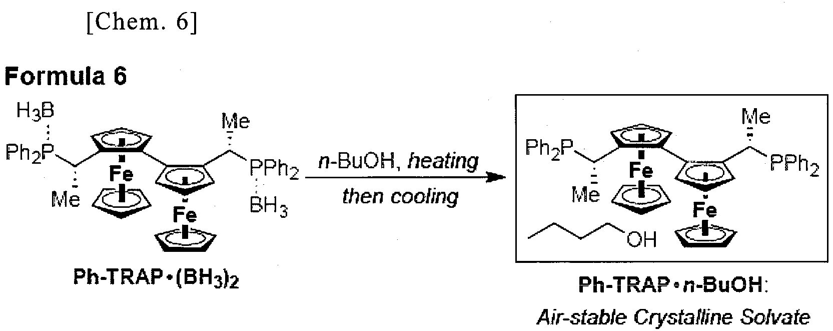

Specifically, the present invention includes the following [1] to [9].
[1] A crystalline alcohol solvate consisting of 2,2"-bis[1-(diphenylphosphino)ethyl]-1,1"-biferrocene (Ph-TRAP) represented by the following planer structural formula (1) 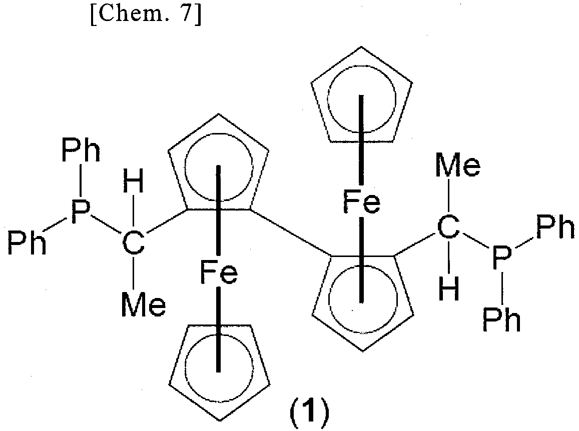 [Wherein,
   a solid line represents a single bond;
   H represents a hydrogen atom, C represents a carbon atom, and P represents a phosphorus atom;
   Me represents a methyl group, and Ph represents a phenyl group;
   Fe represents a divalent iron ion, a pentagon containing a circle represents a cyclopentadienyl anion, and a bold line represents six-electron donation of the cyclopentadienyl anion to Fe.]
   and an alcohol represented by the following general formula (A). 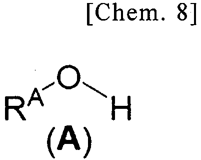 [Wherein,
      a solid line represents a single bond;
      H represents a hydrogen atom, and O represents an oxygen atom;
      R^{A} represents a hydrocarbyl group.]
[2] The crystalline alcohol solvate according to the above [1], wherein Ph-TRAP is an optically active form.
[3] The crystalline alcohol solvate according to the above [1] or [2], wherein R^{A} is selected from the group consisting of an alkyl group having 1 to 6 carbon atoms and a cycloalkyl group having 3 to 6 carbon atoms.
[4] The crystalline alcohol solvate according to any one of the above [1] to [3], wherein R^{A} is selected from the group consisting of an n-propyl group and an n-butyl group.
[5] The crystalline alcohol solvate according to any one of the above [1] to [4], wherein the amount of the alcohol represented by general formula (A) ranges from 30 to 100 mol% relative to the amount of Ph-TRAP.
[6] A production method of the crystalline alcohol solvate according to any one of the above [1] to [5], comprising a reaction of {µ-[2,2"-bis[1-(diphenylphosphino-rP)ethyl]-1,1"-biferrocene]}hexahydrodiboron (Ph-TRAP·(BH₃)₂) represented by the following planer structural formula (1·(BH₃)₂) 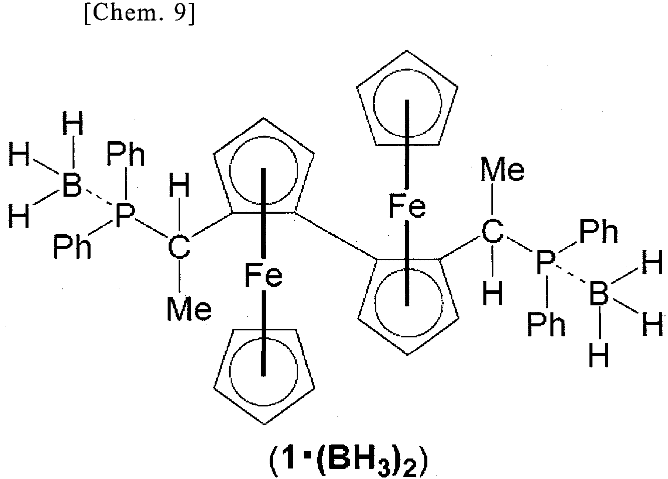 [Wherein,
   a solid line represents a single bond, and a dashed line represents a coordinate bond;
   H represents a hydrogen atom, B represents a boron atom, C represents a carbon atom, and P represents a phosphorus atom;
   Me represents a methyl group, and Ph represents a phenyl group;
   Fe represents a divalent iron ion, a pentagon containing a circle represents a cyclopentadienyl anion, and a bold line represents six-electron donation of the cyclopentadienyl anion to Fe.]
   with an alcohol represented by the following general formula (A). 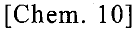 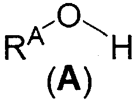 [Wherein,
      a solid line represents a single bond;
      H represents a hydrogen atom, and O represents an oxygen atom;
      R^{A} represents a hydrocarbyl group.]
[7] The production method according to the above [6], wherein Ph-TRAP·(BH₃)₂ is an optically active form.
[8] The production method according to the above [6] or [7], wherein R^{A} is selected from the group consisting of an alkyl group having 1 to 6 carbon atoms and a cycloalkyl group having 3 to 6 carbon atoms.
[9] The production method according to any one of the above [6] to [8], wherein R^{A} is selected from the group consisting of an n-propyl group and an n-butyl group.

### Advantageous Effects of Invention

The novel crystalline alcohol solvate (hereinafter referred to as Ph-TRAP·R^{A}OH (1·A)), consisting of Ph-TRAP represented by the planer structural formula (1) described above (hereinafter referred to as Ph-TRAP (1)) and the alcohol represented by the general formula (A) described above (hereinafter referred to as R^{A}OH (A)), can be readily produced without using the synthetically challenging Ph-TRAP (1) itself, by reacting Ph-TRAP·(BH₃)₂ represented by the planer structural formula ((1·(BH₃)₂)) described above (hereinafter referred to as Ph-TRAP·(BH₃)₂ (1·(BH₃)₂)) with R^{A}OH (A). Furthermore, according to a preferred embodiment of the present invention, Ph-TRAP·R^{A}OH (1·A) exhibits completely different physical properties from Ph-TRAP (1) itself, offering advantages such as remarkable crystallinity and air stability, as well as ease of isolation, purification, and long-term storage. Accordingly, the present invention can contribute to the practical application and further improvement in efficiency of the asymmetric hydrogenation of aromatics, which is the catalytic reaction useful for the production of optically active cyclic compounds.

### Brief Description of Drawings

[FIG. 1] FIG. 1 shows the result of X-ray crystallography (thermal ellipsoid plot; 50% probability level) of (S_{C},S_{C},R_{P},R_{P})-Ph-TRAP·n-PrOH produced in Example 2 below.
[FIG. 2] FIG. 2 shows the result of X-ray crystallography (thermal ellipsoid plot; 50% probability level) of (S_{C},S_{C},R_{P},R_{P})-Ph-TRAP·n-BuOH produced in Example 3 below.
[FIG. 3] FIG. 3 shows the result of X-ray crystallography (thermal ellipsoid plot; 50% probability level) of (R_{C},R_{C},S_{P},S_{P})-Ph-TRAP·n-BuOH produced in Example 4 below.
[FIG. 4] FIG. 4 shows the ¹H NMR (left side) and ³¹P NMR (right side) spectrum charts of a portion of (S_{C},S_{C},R_{P},R_{P})-Ph-TRAP·n-BuOH produced on a preparative scale in Example 6 below, measured in deuterated chloroform after being exposed to air at room temperature for 3 months.

### Description of Embodiments

Hereinafter, Ph-TRAP (1) and R^{A}OH (A), which constitute Ph-TRAP·R^{A}OH (1·A) according to the present invention, are described in detail. First, Ph-TRAP (1) is a compound represented by the planer structural formula (1) described above, namely, 2,2"-bis[1-(diphenylphosphino)ethyl]-1,1"-biferrocene. In the planer structural formula (1) described above: a solid line represents a single bond; H represents a hydrogen atom, C represents a carbon atom, and P represents a phosphorus atom; Me represents a methyl group, and Ph represents a phenyl group; Fe represents a divalent iron ion, a pentagon containing a circle represents a cyclopentadienyl anion, and a bold line represents six-electron donation of the cyclopentadienyl anion to Fe.

Ph-TRAP (1) according to the present invention has two carbon-centered chiral structures (hereinafter, the absolute configurations of these carbon-centered chiral structures are represented by R_{C} or Sc) and two planar chiral structures (hereinafter, the absolute configurations of these planar chiral structures are represented by R_{P} or S_{P}). Accordingly, the present compound may be either a mixture of stereoisomers arising from these chiral structures or a single stereoisomer; however, from the viewpoint of application to the asymmetric hydrogenation of aromatics, the single stereoisomer, i.e., the optically active form, is preferred. Specific examples of preferred form of optically active Ph-TRAP (1) include (S_{C},S_{C},R_{P},R_{P})-Ph-TRAP and (R_{C},R_{C},S_{P},S_{P})-Ph-TRAP due to their structural requirements, whose stereochemical structures are shown in Formula 7 below (in accordance with convention, the carbon atom (C) and the hydrogen atom (H) bonded to carbon atom are omitted in the drawings of stereochemical structures herein; a solid wedge line represents a carbon-carbon bond projecting toward the viewer, while a dashed wedge line represents a carbon-carbon bond extending away from the viewer).

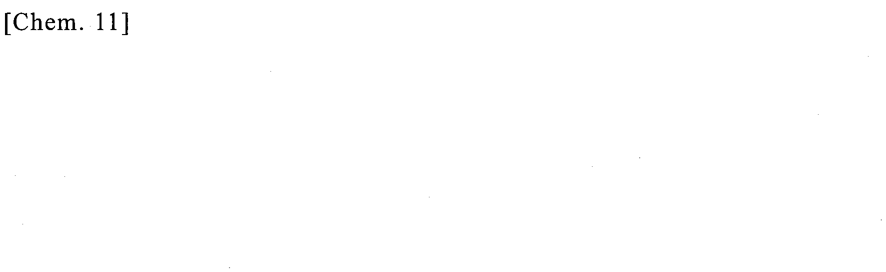

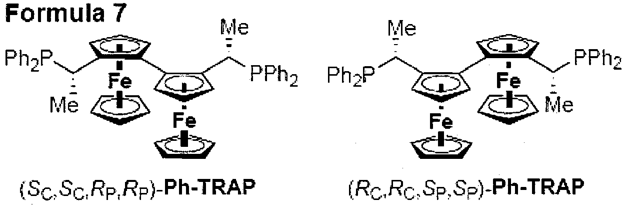

Next, R^{A}OH (A) according to the present invention include an alcohol represented by the general formula (A) described above. In the general formula (A) described above: a solid line represents a single bond; H represents a hydrogen atom, and O represents an oxygen atom; R^{A} represents a hydrocarbyl group. The hydrocarbyl group in R^{A} includes usually a linear, branched, or cyclic hydrocarbyl group, preferably a group selected from the group consisting of an alkyl group having 1 to 6 carbon atoms and a cycloalkyl group having 3 to 6 carbon atoms, and more preferably an alkyl group having 3 to 4 carbon atoms. Preferred specific examples of the hydrocarbyl group in R^{A} include a methyl group, an ethyl group, an n-propyl group, an isopropyl group, an n-butyl group, an isobutyl group, a sec-butyl group, a tert-butyl group, an n-pentyl group, an n-hexyl group, a cyclopropyl group, a cyclobutyl group, a cyclopentyl group, and a cyclohexyl group; particularly preferable specific examples thereof include an n-propyl group and an n-butyl group from the viewpoint of the crystallinity of Ph-TRAP-R^{A}OH (1·A). Particularly preferable specific examples of R^{A}OH (A) according to the present invention include an n-propyl alcohol (n-PrOH) and n-butyl alcohol (n-BuOH).

Specific examples of preferred form of Ph-TRAP·R^{A}OH (1·A) according to the present invention include (S_{C},S_{C},R_{P},R_{P})-Ph-TRAP-R^{A}OH and (R_{C},R_{C},S_{P},S_{P})-Ph-TRAP-R^{A}OH, from the same viewpoint as that of Ph-TRAP (1) constituting the present alcohol solvate.

Although the content of R^{A}OH (A) in Ph-TRAP·R^{A}OH (1·A) depends on the chemical structure of R^{A}OH (A) and the isolation or purification methods of PH-TRAP-R^{A}OH (1·A), is appropriately selected usually from the range of 10 to 200 mol%, preferably 20 to 150 mol%, more preferably 30 to 100 mol% relative to the amount of Ph-TRAP (1).

Particularly preferred specific examples of Ph-TRAP·R^{A}OH (1·A) according to the present invention include (S_{C},S_{C},R_{P},R_{P})-Ph-TRAP·n-PrOH, (R_{C},R_{C},S_{P},S_{P})-Ph-TRAP·n-PrOH, (S_{C},S_{C},R_{P},R_{P})-Ph-TRAP·n-BuOH, and (R_{C},R_{C},S_{P},S_{P})-Ph-TRAP·n-BuOH, whose stereochemical structures are shown in Formula 8 below.

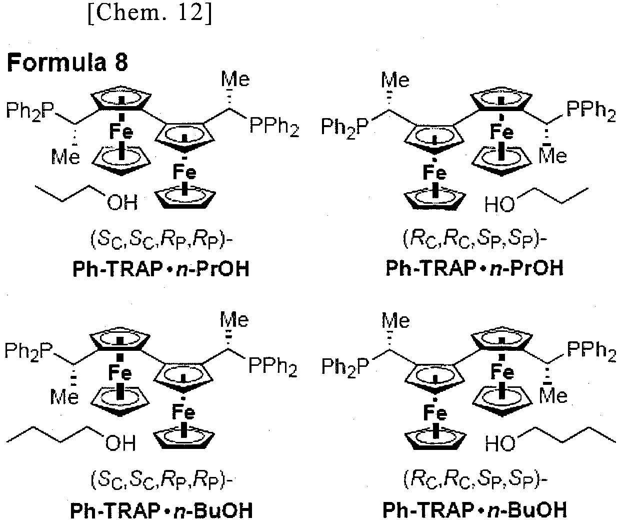

Hereinafter, the production method of Ph-TRAP·R^{A}OH (1·A) according to the present invention (hereinafter referred to as the production method of the present invention) is described in detail. In principle, Ph-TRAP·R^{A}OH (1·A) may be formed by simply mixing Ph-TRAP (1) with R^{A}OH (A). However, due to the difficulty in synthesizing Ph-TRAP (1) itself, it is practically preferable to produce Ph-TRAP·R^{A}OH (1·A) by reacting Ph-TRAP·(BH₃)₂ (1·(BH₃)₂) with R^{A}OH (A). The specific procedure is described in detail below.

First, Ph-TRAP·(BH₃)₂ (1·(BH₃)₂) according to the production method of the present invention is a compound represented by the planer structural formula (1·(BH₃)₂) described above, namely, {µ-[2,2"-bis[1-(diphenylphosphino-_{κ}P)ethyl]-1,1''-biferrocene]}hexahydrodiboron. In the planer structural formula (1·(BH₃)₂) described above: a solid line represents a single bond, and a dashed line represents a coordinate bond; H represents a hydrogen atom, B represents a boron atom, C represents a carbon atom, and P represents a phosphorus atom; Me represents a methyl group, and Ph represents a phenyl group; Fe represents a divalent iron ion, a pentagon containing a circle represents a cyclopentadienyl anion, and a bold line represents six-electron donation of the cyclopentadienyl anion to Fe.

Ph-TRAP·(BH₃)₂ (1·(BH₃)₂) according to the production method of the present invention, for the same reasons as that of Ph-TRAP·R^{A}OH (1·A) described above, is preferably a single stereoisomer, i.e., an optically active form, particularly from the viewpoint of application to the asymmetric hydrogenation of aromatics. Specific examples of preferred form of optically active Ph-TRAP·(BH₃)₂ (1·(BH₃)₂) include (S_{C},S_{C},R_{P},R_{P})-Ph-TRAP·(BH₃)₂ and (R_{C},R_{C},S_{P},S_{P})-Ph-TRAP·(BH₃)₂ due to their structural requirements, whose stereochemical structures are shown in Formula 9 below. (S_{C},S_{C},R_{P},R_{P})-Ph-TRAP·R^{A}OH and (R_{C},R_{C},S_{P},S_{P})-Ph-TRAP·R^{A}OH described above, which are the preferred forms of optically active Ph-TRAP'_{R}^{A}OH (1·A), can be readily and selectively produced by using these optically active Ph-TRAP·(BH₃)₂ (1·(BH₃)₂).

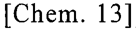

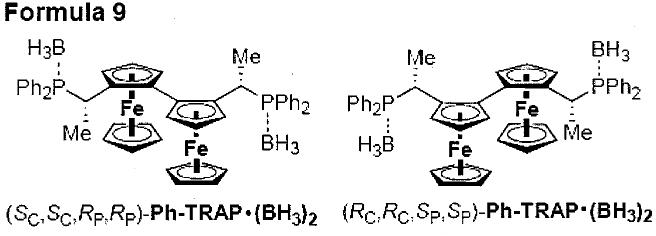

A synthesis method of Ph-TRAP·(BH₃)₂ (1·(BH₃)₂) used in the production method of the present invention is not particularly limited. However, the synthesis method that does not require the synthetically challenging Ph-TRAP (1) itself, is practically preferred, and a specific example of the method is shown in Formula 10 below. Specifically, Ph-TRAP·(BH₃)₂ (1·(BH₃)₂) can be produced readily and reproducibly by starting from commercially available N,N-dimethyl-1-ferrocenylethylamine (commonly known as Ugi's Amine), followed by lithiation and bromination (Step 1), phosphination (Step 2), reaction with a borane source (Step 3), reaction with a magnesium source (Step 4), reaction with an oxidizing agent (Step 5), and, if necessary, treatment with a borane source. In addition, (S_{C},S_{C},R_{P},R_{P})-Ph-TRAP·(BH₃)₂ and (R_{C},R_{C},S_{P},S_{P})-Ph-TRAP·(BH₃)₂ described above, which are the particularly preferred forms of optically active Ph-TRAP·(BH₃)₂ (1·(BH₃)₂), can be readily and selectively prepared by applying the optically active form of Ugi's Amine to the synthesis method.

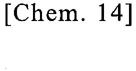

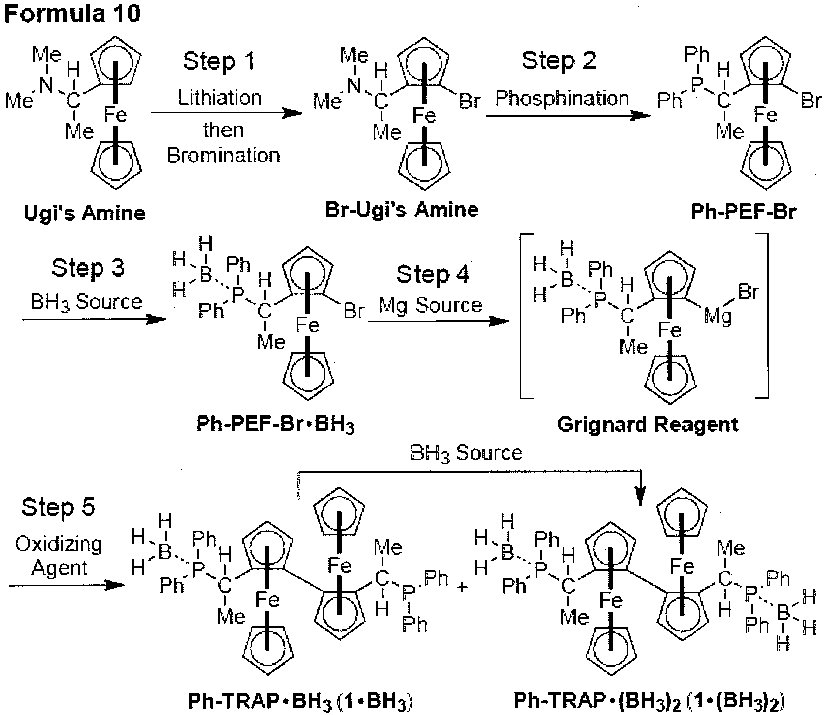

The reaction solution obtained in Step 5 of the above synthesis method may, if necessary, be subjected to post-treatment, and the resulting Ph-TRAP·(BH₃)₂ (1· (BH₃)₂) may be isolated from the solution and further purified. Specific examples of the post-treatment methods include: washing of the reaction solution; extraction of the aqueous layer; drying, filtration, and concentration of the organic layer. These post-treatment methods may be carried out alone or in combination. Specific examples of the isolation methods include: crystallization of the reaction solution; filtration, washing, and drying of crude crystals. These isolation methods may be carried out alone or in combination. Specific examples of the purification methods include: dissolution, decolorization with an adsorbent, column chromatography, and recrystallization of the crude crystals; filtration, washing and drying of purified crystals. These purification methods may be carried out alone or in combination.

When using Ph-TRAP·(BH₃)₂ (1·(BH₃)₂) for the production method of the present invention, the reaction solution obtained in Step 5 of the above synthesis method may be used as is, or may be used after performing the above-described post-treatment, isolation, or purification as necessary. On the other hand, for more efficient production of the desired Ph-TRAP·R^{A}OH (1·A), it is preferable to use the reaction solution obtained in Step 5 of the above synthesis method, after optional post-treatment, if necessary, in the production method of the present invention, without performing isolation or purification of the resulting Ph-TRAP·(BH₃)₂ (1·(BH₃)₂).

Next, R^{A}OH (A) used in the production method of the present invention include an alcohol represented by the general formula (A) described above. In the general formula (A) described above: a solid line represents a single bond; H represents a hydrogen atom, and O represents an oxygen atom; R^{A} represents a hydrocarbyl group. The hydrocarbyl group in R^{A} includes usually a linear, branched, or cyclic hydrocarbyl group, preferably a group selected from the group consisting of an alkyl group having 1 to 6 carbon atoms and a cycloalkyl group having 3 to 6 carbon atoms, and more preferably an alkyl group having 3 to 4 carbon atoms. Preferred specific examples of the hydrocarbyl group in R^{A} include a methyl group, an ethyl group, an n-propyl group, an isopropyl group, an n-butyl group, an isobutyl group, a sec-butyl group, a tert-butyl group, an n-pentyl group, an n-hexyl group, a cyclopropyl group, a cyclobutyl group, a cyclopentyl group, and a cyclohexyl group; particularly preferable specific examples include an n-propyl group and an n-butyl group from the viewpoint of the crystallinity of Ph-TRAP·R^{A}OH (1·A). Particularly preferable specific examples of R^{A}OH (A) according to the production method of the present invention include n-propyl alcohol (n-PrOH) and n-butyl alcohol (n-BuOH).

To further describe the production method of the present invention in more detail, the reaction mechanism of Ph-TRAP·(BH₃)₂ (1·(BH₃)₂) with R^{A}OH (A) is shown in Formula 11 below.

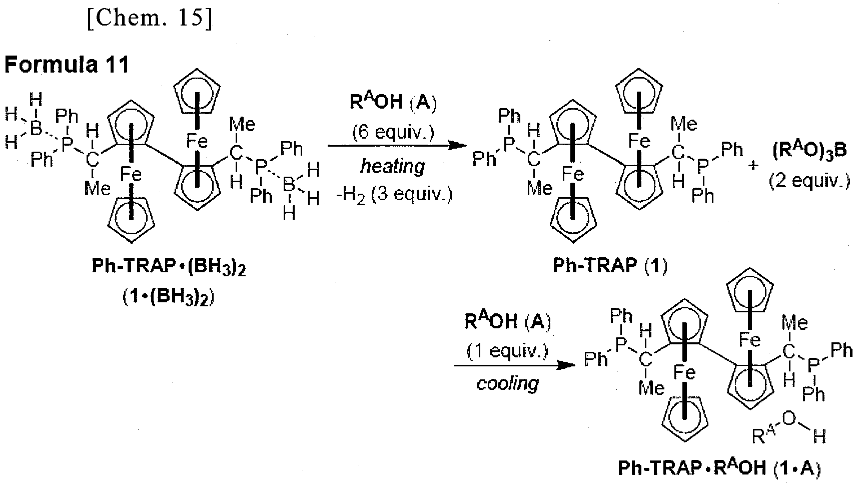

As can be seen from the above reaction mechanism, R^{A}OH (A) used in the production method of the present invention is theoretically required in an amount of 7 equivalents or more relative to Ph-TRAP·(BH₃)₂, and is therefore preferable to use R^{A}OH (A) not only as a reactant but also as a solvent. Although the amount of R^{A}OH (A) used as the solvent depends on its chemical structure, it is appropriately selected from the range of usually 1 to 200 times by volume, preferably 2 to 100 times by volume, and more preferably 3 to 50 times by volume relative to the weight of Ph-TRAP·(BH₃)₂ (1·(BH₃)₂) used.

In cases where Ph-TRAP·(BH₃)₂ (1·(BH₃)₂) is reacted with R^{A}OH (A) without purification, a solvent present in the reaction solution prepared in Step 5 of the above synthesis method, or a residual solvent contained in the crude product of Ph-TRAP·(BH₃)₂ (1·(BH₃)₂), may be allowed to coexist. The coexisting solvents are not particularly limited as long as they do not inhibit the reaction of Ph-TRAP·(BH₃)₂ (1·(BH₃)₂) with R^{A}OH (A) or the solvation of R^{A}OH (A) to Ph-TRAP (1) resulting in the reaction; particularly preferred specific examples thereof include chloroform, toluene, tetrahydrofuran, and water.

The production method of the present invention is preferably carried out under an inert gas atmosphere in order to suppress the oxidative decomposition of Ph-TRAP (1) in solution at higher temperatures; specific examples of the inert gas include argon gas and nitrogen gas; preferred examples thereof include nitrogen gas. The reaction temperature is appropriately selected from the range of usually 0°C to 220°C, preferably 40°C to 180°C, and more preferably 80°C to 140°C. The production method of the present invention may be carried out under reduced pressure, atmospheric pressure, or high pressure in order to control the reaction temperature; however, it is preferably conducted under atmospheric pressure due to its operational simplicity. Although the reaction time depends on the chemical structure and amount of R^{A}OH (A) used as both the reactant and solvent, and the reaction temperature and pressure, it is appropriately selected from the range of usually 5 minutes to 48 hours, preferably 10 minutes to 24 hours, and more preferably 15 minutes to 12 hours.

The reaction solution obtained through the production method of the present invention may, if necessary, be subjected to post-treatment, and the desired Ph-TRAP·R^{A}OH (1·A) may be isolated from the solution and further purified. Specific examples of the post-treatment methods include: washing of the reaction solution; extraction of the aqueous layer; drying, filtration, and concentration of the organic layer. These post-treatment methods may be carried out alone or in combination. Specific examples of the isolation methods include: crystallization of the reaction solution; filtration, washing, and drying of crude crystals. These isolation methods may be carried out alone or in combination. Specific examples of the purification methods include: dissolution, decolorization with an adsorbent, column chromatography, and recrystallization of the crude crystals; filtration, washing and drying of purified crystals. These purification methods may be carried out alone or in combination.

When using Ph-TRAP·R^{A}OH (1·A) as a ligand for the asymmetric hydrogenation of aromatics, the reaction solution obtained by the production method of the present invention may be used as is, or may be used after performing the above-described post-treatment, isolation, or purification as necessary. On the other hand, according to the preferred embodiment of the present invention, Ph-TRAP·R^{A}OH (1·A) exhibits remarkable crystallinity and air stability, and is also suitable for long-term storage. Therefore, in order to fully utilize these properties, it is preferable to use the present compound after isolation as crystals from the reaction solution, as a ligand for the asymmetric hydrogenation of aromatics.

The present invention enables the facile production of Ph-TRAP (1), which was previously difficult to synthesize, isolate, or purify, as a remarkable crystalline and air-stable alcohol solvate, i.e., Ph-TRAP·R^{A}OH (1·A). Therefore, the present invention is expected to facilitate the practical application and further improvement in efficiency of the asymmetric hydrogenation of aromatics, which is the catalytic reaction useful for the production of optically active cyclic compounds.

### Examples

Hereinafter, specific examples will be described in detail regarding the production of Ph-TRAP·R^{A}OH (1·A) according to the present invention and various stability tests thereof. However, the present invention is not limited thereto in any way. Unless otherwise noted, substrates and solvents were charged under a nitrogen stream, reactions were conducted under a nitrogen atmosphere, post-treatment, isolation, and purification were performed in air. In the examples, the apparatus used for measuring physical properties and the measurement and analysis conditions are listed below:
1) Proton Nuclear Magnetic Resonance Spectroscopy (¹H NMR): 400MR DD2 Type Apparatus (resonance frequency 400 MHz; manufactured by Agilent Technologies, Inc.)
2) Carbon 13 Nuclear Magnetic Resonance Spectroscopy (¹³C NMR): 400MR DD2 Type Apparatus (resonance frequency 100 MHz; manufactured by Agilent Technologies, Inc.)
3) Phosphorus 31 Nuclear Magnetic Resonance Spectroscopy (³¹P NMR): 400MR DD2 Type Apparatus (resonance frequency 161 MHz; manufactured by Agilent Technologies, Inc.)
4) X-ray Crystallography: XtaLAB Synergy-S Type Apparatus (manufactured by Rigaku Oxford Diffraction)
   [Measurement and Analysis Conditions] X-ray Source: CuKα radiation; Device Control Program: CrysAlis^{PRO}; Structural Analysis Software: Olex² 1.3-ac4; Structural Analysis Program: SHELXS and SHELXL-2018/3; Drawing Software: Mercury 4.3.0.

### [Example 1] Production of (S_{C},S_{C},R_{P},R_{P})-Ph-TRAP·(BH₃)₂ (Formula 12)

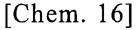

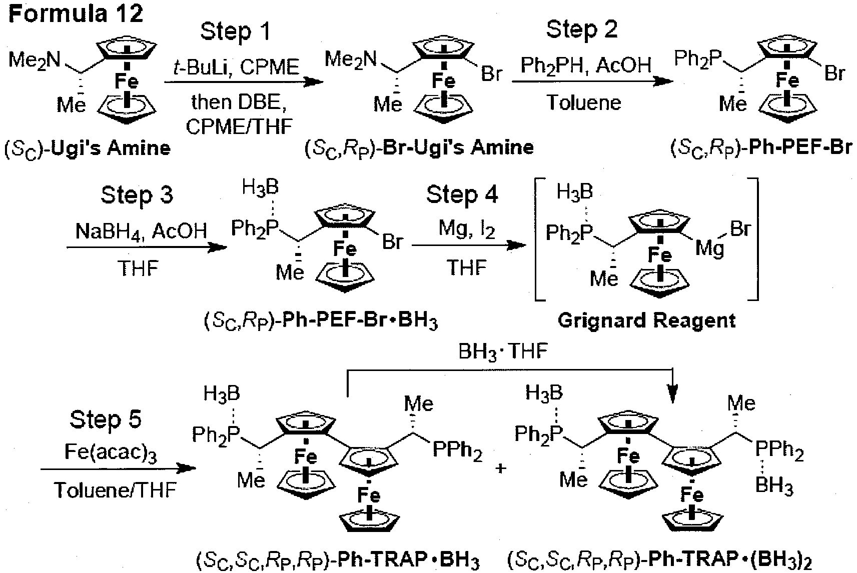

### Step 1: Synthesis of (S_{C},R_{P})-1-Bromo-2-[1-(dimethylamino)ethyl]ferrocene ((S_{C},R_{P})-Br-Ugi's Amine)

[Setup and Reaction] A 200 mL, four-necked, round-bottomed flask was charged with (S_{C})-N,N-dimethyl-1-ferrocenylethylamine ((S_{C})-Ugi's Amine; 8.7 g, 33.9 mmol, 1.0 equivalent), equipped with a magnetic stirring bar, dropping funnel, thermometer, and a three-way stopcock, then evacuated and backfilled with nitrogen. Dehydrated cyclopentyl methyl ether (CPME; 51 mL) was added to the flask, and the resulting reddish orange solution was then cooled to -20°C under stirring using a dry ice-acetone bath. A solution of tert-butyllithium (t-BuLi) in n-pentane (1.70 mol/L, 21.9 mL, 37.3 mmol, 1.1 equivalents) was charged into the dropping funnel, and then added dropwise over 30 minutes to the stirred reaction solution at a rate sufficient to maintain the internal temperature -15°C or below. The resulting orange slurry was stirred at -20°C for 2 hours, followed by the addition of dehydrated tetrahydrofuran (THF; 10 mL). Next, 1,2-dibromoethane (DBE; 3.4 mL, 39.5 mmol, 1.17 equivalents) and dehydrated THF (7 mL) were successively charged into the dropping funnel, and then added dropwise over 30 minutes to the stirred reaction mixture at a rate sufficient to maintain the internal temperature at -15°C or below. The resulting mixture was further stirred at -20°C for 1 hour.

[Post-Treatment] The resulting yellowish orange reaction solution was allowed to warm to room temperature, followed by the addition of tap water (20 mL). The biphasic mixture was stirred and then allowed to stand to separate the aqueous layer. The organic layer was washed twice with tap water (20 mL), and then concentrated to dryness under reduced pressure using a rotary evaporator, yielding 11.3 g of a crude product of the desired (S_{C},R_{P})-Br-Ugi's Amine as a dark brown solid. Purity: 90.1 mol%. Despite the presence of (S_{C},S_{P})-Br-Ugi's amine and unreacted (Sc)-Ugi's amine as major impurities, the present compound was used in its crude form in the next step without further purification.

¹H NMR (400 MHz, CDCl₃): δ = 4.46 (dd, J = 1.6, 2.4 Hz, 1H), 4.16 (s, 5H), 4.14 (dt, J = 0.4, 2.8 Hz, 1H), 4.10 (ddd, J = 0.4, 1.6, 2.8 Hz, 1H), 3.75 (q, J = 7.2 Hz, 1H), 2.13 (s, 6H), 1.52 (d, J = 7.2 Hz, 3H). ¹³C NMR (100 MHz, CDCl₃): δ = 87.38, 79.80, 71.21, 69.82, 65.68, 65.19, 56.07, 41.15, 16.80.

### Step 2: Synthesis of (S_{C},R_{P})-1-Bromo-2-[1-(diphenylphosphino)ethyl]ferrocene ((S_{C},R_{P})-Ph-PEF-Br)

[Setup and Reaction] A 200 mL, four-necked, round-bottomed flask was charged with the crude form of (S_{C},R_{P})-Br-Ugi's Amine synthesized in Step 1 (purity: 90.1 mol%, 11.3 g, <33.9 mmol, 1.0 equivalent), equipped with a magnetic stirring bar, Dimroth condenser, thermometer, and a three-way stopcock, then evacuated and backfilled with nitrogen. Degassed toluene (14 mL), degassed acetic acid (13.6 mL, 237.3 mmol, 7.0 equivalents), and diphenylphosphine (Ph₂PH; 5.9 mL, 33.9 mmol, 1.0 equivalent) were sequentially added to the flask. The resulting dark brown solution was stirred under reflux for 6 hours while being heated using an oil bath set at 130°C.

[Post-Treatment] The resulting reaction solution was allowed to cool to 40°C, followed by the sequential addition of degassed toluene (70 mL) and degassed water (28 mL). The biphasic mixture was stirred at 40°C for 30 minutes, allowed to stand, and the aqueous layer was then removed under a nitrogen atmosphere. The remaining organic layer was washed twice with degassed water (56 mL) at 40°C under a nitrogen atmosphere. After attaching a Claisen distillation apparatus to the reaction flask, the washed organic layer was stirred at 60°C while gradually reducing the pressure inside the apparatus to 15 Torr, thus being concentrated to dryness. The apparatus was brought back to atmospheric pressure under nitrogen after the concentration, yielding a crude product of the desired (S_{C},R_{P})-Ph-PEF-Br (<33.9 mmol) as a dark brown amorphous substance. Due to its gradual decomposition in air, the present compound was used in its crude form in the next step while being stored in the reaction flask filled with nitrogen.
³¹P NMR (161MHz, CDCl₃): δ = 7.55 (s, 1P)

### Synthesis of {(S_{C},R_{P})-1-Bromo-2-[1-(diphenylphosphino-κP)ethyl]ferrocene}trihydroboron ((S_{C},R_{P})-Ph-PEF-Br·BH₃)

[Setup and Reaction] This step was carried out using the reaction flask from Step 2, replacing the Claisen distillation apparatus with a dropping funnel. Dehydrated THF (34 mL) and sodium borohydride (NaBH₄; 1.54 g, 40.7 mmol, 1.2 equivalents) were sequentially added to the crude product of (S_{C},R_{P})-Ph-PEF-Br (<33.9 mmol, 1.0 equivalent), synthesized in Step 2 and stored in the reaction flask filled with nitrogen. Degassed acetic acid (2.3 mL, 40.7 mmol, 1.2 equivalents) and dehydrated THF (9.2 mL) were successively charged into the dropping funnel, and then added dropwise over 5 minutes to the stirred suspension in the reaction flask at a rate sufficient to maintain the internal temperature at 40°C or below (bubbling was observed during the addition). The resulting reaction solution was stirred at 40°C for 30 minutes, and then stirred under reflux for 3 hours while being heated using an oil bath set at 80°C.

[Post-Treatment, Isolation and Purification] After the resulting reaction solution was allowed to cool to room temperature under stirring, a mixture of methanol (68 mL) and tap water (34 mL) was charged into the dropping funnel, and then added dropwise to the solution over 15 minutes (vigorous bubbling was observed at the initial stage of the addition). The resulting orange slurry was cooled to 0°C using an ice-water bath, and then filtered by suction using a Kiriyama funnel to collect crude crystals, which were washed with a mixture of methanol (34 mL) and tap water (8.5 mL). To the wet crude crystals obtained (approximately 18 g), toluene (90 mL) and tap water (45 mL) were sequentially added. The resulting biphasic mixture was stirred at 40°C, filtered by suction using a Kiriyama funnel, and then allowed to stand to separate the aqueous layer. The organic layer was dehydrated and decolorized with silica gel, and then concentrated to dryness under reduced pressure using a rotary evaporator. The obtained residue was recrystallized from toluene and n-heptane, yielding 12.9 g of the desired (S_{C},R_{P})-Ph-PEF-Br·BH₃ as an air-stable orange powder. Overall Yield from (Sc)-Ugi's Amine: 77.5%. In this reaction, several byproducts derived from impurities in the (S_{C},R_{P})-Br-Ugi's Amine used in Step 2 were formed; however, all of them could be readily removed by the recrystallization.

¹H NMR (400 MHz, CDCl₃): δ = 8.02-7.93 (m, 2H), 7.63-7.53 (m, 3H), 7.33-7.27 (m, 1H), 7.17-7.03 (m, 4H), 4.49 (t, J = 1.6 Hz, 1H), 4.28 (dd, J = 1.6, 2.4 Hz, 1H), 4.21 (dt, J = 0.4, 2.4 Hz, 1H), 4.18 (s, 5H), 3.68 (dq, J = 16.4, 7.2 Hz, 1H), 1.66 (dd, J = 7.2, 16.4 Hz, 3H), 1.42-0.30 (br, 3H).

¹³C NMR (100 MHz, CDCl₃): δ = 133.46 (d, J_{P-C} = 8.4 Hz), 133.06 (d, J_{P-C} = 8.5 Hz), 131.61 (d, J_{P-C} = 2.5 Hz), 130.64 (d, J_{P-C} = 2.5 Hz), 128.91 (d, J_{P-C} = 9.3 Hz), 128.15 (d, J_{P-C} = 54.0 Hz), 127.70 (d, J_{P-C} = 10.2 Hz), 127.00 (d, J_{P-C} = 51.5 Hz), 86.81 (d, J_{P-C} = 4.2 Hz), 80.86 (s), 70.99 (s), 68.96 (s), 66.44 (s), 66.23 (s), 29.22 (d, J_{P-C} = 30.4 Hz), 17.39 (d, J_{P-C} = 5.1 Hz).

³¹p NMR (161 MHz, CDCl₃): δ = 26.37 (br, 1P).

### Step 4/Step 5: Preparation of Grignard Reagent/Synthesis of (S_{C},S_{C},R_{P},R_{P})-Ph-TRAP·(BH₃)₂

[Setup and Reaction] A 50 mL, four-necked, round-bottomed flask was charged with metallic magnesium (109 mg, 4.48 mmol, 1.1 equivalents), equipped with a magnetic stirring bar, dropping funnel, Dimroth condenser, and a three-way stopcock, then evacuated and backfilled with nitrogen. Dehydrated THF (550 µL) and iodine (5.2 mg, 0.5 mol%) were sequentially added to the flask, and the mixture was then stirred gently at room temperature for 15 minutes. To the resulting white suspension, a solution of (S_{C},R_{P})-Ph-PEF-Br·BH₃ synthesized in Step 3 (2.0 g, 4.07 mmol, 1.0 equivalent) in dehydrated THF (8 mL) was added in one portion. The suspension was stirred under reflux while being heated using an oil bath set at 80°C for 1 hour, affording a solution of the desired Grignard reagent (<4.07 mmol) as a deep-red liquid. A solution of iron(III) acetylacetonate (Fe(acac)₃; 1.51 g, 4.27 mmol, 1.05 equivalents) in dehydrated toluene (15 mL) was charged into the dropping funnel, and then added dropwise to the stirred reaction solution under reflux over 2 minutes. The resulting mixture was further stirred under reflux for 30 minutes while being heated using an oil bath set at 100°C.

[Post-Treatment, Isolation and Purification] After cooling the reaction solution to room temperature, a THF solution of boranetetrahydrofuran complex (BH₃·THF; 1.10 mol/L, 925 µL, 1.02 mmol, 0.25 equivalents) was added under a nitrogen atmosphere. The resulting mixture was stirred at room temperature for 5 minutes, followed by the addition of 1N hydrochloric acid (20 mL, 20.0 mmol, 4.9 equivalents). The biphasic mixture was further stirred at room temperature and then allowed to stand to separate the aqueous layer. The organic layer was washed twice with tap water (10 mL), dehydrated and decolorized with silica gel, and then concentrated to dryness under reduced pressure using a rotary evaporator. The obtained residue was recrystallized from chloroform and n-hexane, producing 1.49 g of the desired (S_{C},S_{C},R_{P},R_{P})-Ph-TRAP·(BH₃)₂ as an air-stable orange powder. Purity: 85.7% by weight (the main impurity was chloroform); Overall Yield from (S_{C},R_{P})-Ph-PEF-Br·BH₃: 76.3%.

¹H NMR (400 MHz, CD₂Cl₂): δ = 7.86-7.76 (m, 4H), 7.61-7.54 (m, 2H), 7.53-7.46 (m, 4H), 7.41-7.34 (m, 2H), 7.32 (s, 1.15H [CHCl₃]), 7.28-7.13 (m, 8H), 4.42-4.36 (m, 2H), 4.34 (s, 10H), 4.09 (t, J = 2.4 Hz, 2H), 4.07-3.91 (br, 2 H), 3.90-3.72 (br, 2H), 1.74 (dd, J = 7.2, 16.4 Hz, 6H), 1.50-0.40 (br, 6H).

¹³C NMR (100 MHz, CD₂Cl₂): δ = 134.07 (d, J_{P-C} = 8.4 Hz), 132.63 (d, J_{P-C} = 8.5 Hz), 131.58 (d, J_{P-C} = 2.5 Hz), 130.62 (d, J_{P-C} = 1.6 Hz), 129.61 (d, J_{P-C} = 51.4 Hz), 128.81 (d, J_{P-C} = 9.3 Hz), 128.45 (d, J_{P-C} = 9.2 Hz), 128.00 (d, J_{P-C} = 51.4 Hz), 90.09 (s), 84.24 (d, J_{P-C} = 4.2 Hz), 77.60 (s [CHCl₃]), 71.41 (s), 69.71 (s), 68.63 (s), 65.90 (s), 28.91 (d, J_{P-C} = 31.2 Hz), 20.88 (d, J_{P-C} = 3.4 Hz).

³¹P NMR (161 MHz, CD₂Cl₂): δ = 25.73 (br, 2P).

### [Example 2] Production of (S_{C},S_{C},R_{P},R_{P})-Ph-TRAP·n-PrOH (Formula 13)

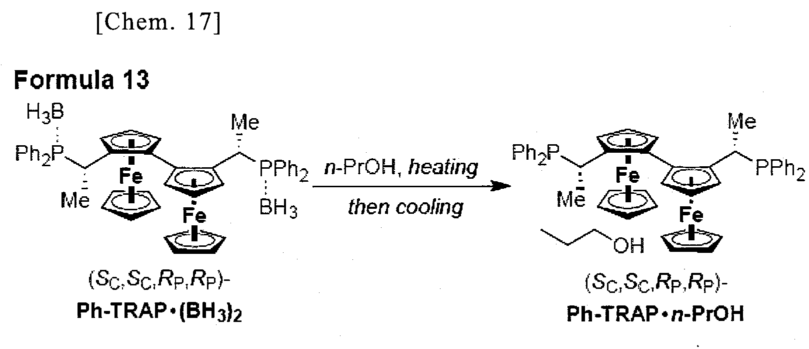

[Setup and Reaction] A 50 mL, two-necked, round-bottomed flask was charged with (S_{C},S_{C},R_{P},R_{P})-Ph-TRAP·(BH₃)₂ produced in Example 1 (purity: 85.7% by weight, 1.14 g, 1.19 mmol, 1.0 equivalent), equipped with a magnetic stirring bar, Dimroth condenser, and a three-way stopcock, then evacuated and backfilled with nitrogen. Dehydrated n-propyl alcohol, a type of alcohol described herein (n-PrOH; bp. 97°C, 34 mL, 30 volumes by weight) was added to the flask, and the resulting mixture was then stirred under reflux for 3 hours while being heated using an oil bath set at 110°C.

The reaction solution was allowed to cool to 60°C and then stirred for 30 minutes under a nitrogen atmosphere. The resulting orange slurry was cooled to 0°C using an ice-water bath, followed by suction filtration using a Kiriyama funnel. The filtered crystals were washed once with dehydrated n-PrOH (11 mL), and then dried by heating at 60°C under reduced pressure of 1 Torr for 1 hour, producing 912 mg of the desired (S_{C},S_{C},R_{P},R_{P})-Ph-TRAP·n-PrOH as an air-stable orange powder. Purity as Ph-TRAP: 96.8% by weight; n-PrOH content relative to Ph-TRAP: 44 mol%; Isolated Yield: 93.4%. Single crystals of (S_{C},S_{C},R_{P},R_{P})-Ph-TRAP·n-PrOH were successfully prepared by a cooling method using n-PrOH as a solvent.

¹H NMR (400 MHz, CD₂Cl₂): δ = 7.32-7.13 (m, 20H), 4.59 (dd, J = 1.2, 2.4 Hz, 2H), 4.30 (s, 10H), 4.17 (t, J = 2.4 Hz, 2H), 3.81 (dd, J = 1.2, 2.4 Hz, 2H), 3.55 (t, J = 6.4 Hz, 0.88H [n-PrOH]), 3.52 (q, J = 7.2 Hz, 2H), 1.51 (sextet, J = 7.2 Hz, 0.88H [n-PrOH]), 1.39-1.31 (m, 6H), 0.92 (t, J = 7.2 Hz, 1.32H [n-PrOH]).

³¹P NMR (161 MHz, CD₂Cl₂): δ = 0.72 (s, 2P).

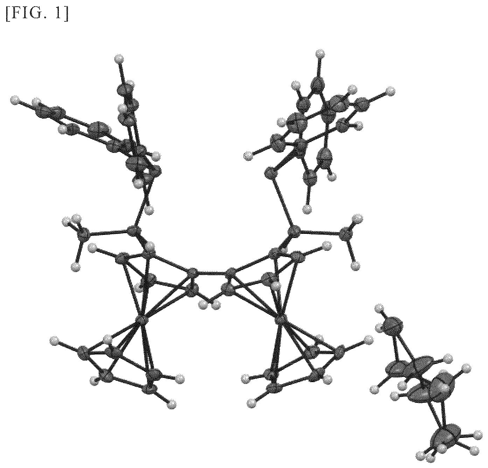

FIG. 1 shows the result of X-ray crystallography (thermal ellipsoid plot; 50% probability level) of (S_{C},S_{C},R_{P},R_{P})-Ph-TRAP·n-PrOH produced in Example 2. The result clearly confirmed that: 1) the absolute configuration of the present alcohol solvate is indeed (S_{C},S_{C},R_{P},R_{P}); and 2) Ph-TRAP was solvated with one molecule, i.e., 100 mol% of n-PrOH in the single crystal. The key parameters ensuring the reliability of the crystallographic analysis are summarized below; Chemical Formula: C₅₁H₅₂Fe₂OP₂; Crystal System: Orthorhombic; Space Group: P2₁2₁2₁ (#19); Lattice Constants: a = 11.6787(2) Å, b = 13.7100(2) Å, c = 26.3299(4) Å, α = β = γ = 90°; Reliability Factor (R₁): 0.0402; Weighted Reliability Factor (wR₂): 0.0873; Goodness of Fit (GOF): 1.052; Flack Parameter: -0.016 (3).

### [Example 3] Production of (S_{C},S_{C},R_{P},R_{P})-Ph-TRAP·n-BuOH (Formula 14)

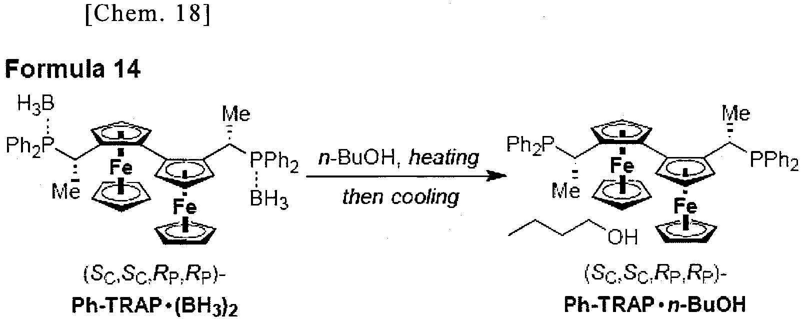

[Setup and Reaction] A 50 mL, two-necked, round-bottomed flask was charged with (S_{C},S_{C},R_{P},R_{P})-Ph-TRAP·(BH₃)₂, separately produced according to the procedure described in Example 1 (purity: 86.8% by weight, 2.50 g, 2.64 mmol, 1.0 equivalent), equipped with a magnetic stirring bar, Dimroth condenser, and a three-way stopcock, then evacuated and backfilled with nitrogen. Dehydrated n-butyl alcohol, a type of alcohol described herein (n-BuOH; bp. 117°C, 25 mL, 10 volumes by weight) was added to the flask, and the resulting mixture was then stirred under reflux for 2 hours while being heated using an oil bath set at 130°C.

The reaction solution was allowed to cool to 80°C and then stirred for 30 minutes under a nitrogen atmosphere. The resulting orange slurry was cooled to 0°C using an ice-water bath, followed by suction filtration using a Kiriyama funnel. The filtered crystals were washed three times with dehydrated n-BuOH (5 mL), and then dried at room temperature for 1 hour under a gentle nitrogen stream, producing 2.13 g of the desired (S_{C},S_{C},R_{P},R_{P})-Ph-TRAP·n-BuOH as an air-stable orange powder. Purity as Ph-TRAP: 92.9% by weight; n-BuOH content relative to Ph-TRAP: 82 mol%; Isolated Yield: 94.3%. Single crystals of (S_{C},S_{C},R_{P},R_{P})-Ph-TRAP·n-BuOH were successfully prepared by a cooling method using n-BuOH as a solvent.

¹H NMR (400 MHz, CDCl₃): δ = 7.32-7.09 (m, 20H), 4.56 (dd, J = 1.2, 2.4 Hz, 2H), 4.30 (s, 10H), 4.12 (t, J = 2.4 Hz, 2H), 3.79 (br, 2H), 3.65 (t, J = 6.4 Hz, 1.64H [n-BuOH]), 3.49 (q, J = 7.2 Hz, 2H), 1.60-1.52 (m, 1.64H [n-BuOH]), 1.45-1.31 (m, 7.64H [Ph-TRAP + n-BuOH]), 0.94 (t, J = 7.2 Hz, 2.46H [n-BuOH]).

³¹P NMR (161 MHz, CDCl₃): δ = 1.34 (s, 2P).

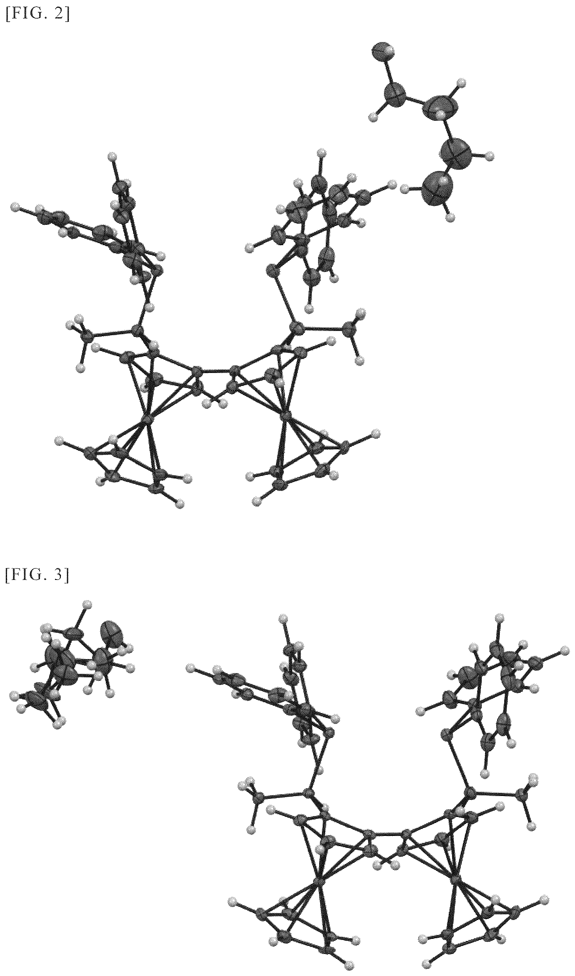

FIG. 2 shows the result of X-ray crystallography (thermal ellipsoid plot; 50% probability level) of (S_{C},S_{C},R_{P},R_{P})-Ph-TRAP·n-BuOH produced in Example 3. The result clearly confirmed that: 1) the absolute configuration of the present alcohol solvate is indeed (S_{C},S_{C},R_{P},R_{P}); and 2) Ph-TRAP was solvated with one molecule, i.e., 100 mol% of n-BuOH in the single crystal. The key parameters ensuring the reliability of the crystallographic analysis are summarized below; Chemical Formula: C₅₂H₅₄Fe₂OP₂; Crystal System: Orthorhombic; Space Group: P2₁2₁2₁ (#19); Lattice Constant : a = 11.7095(2) Å, b = 13.7989 (3) Å, c = 26.4047(4) Å, α = β = γ = 90°; R₁: 0.0492; wR2: 0.1022; GOF: 1.048; Flack Parameter: -0.009(3).

### [Example 4] Production of (R_{C},R_{C},S_{P},S_{P})-Ph-TRAP·n-BuOH (Formula 15)

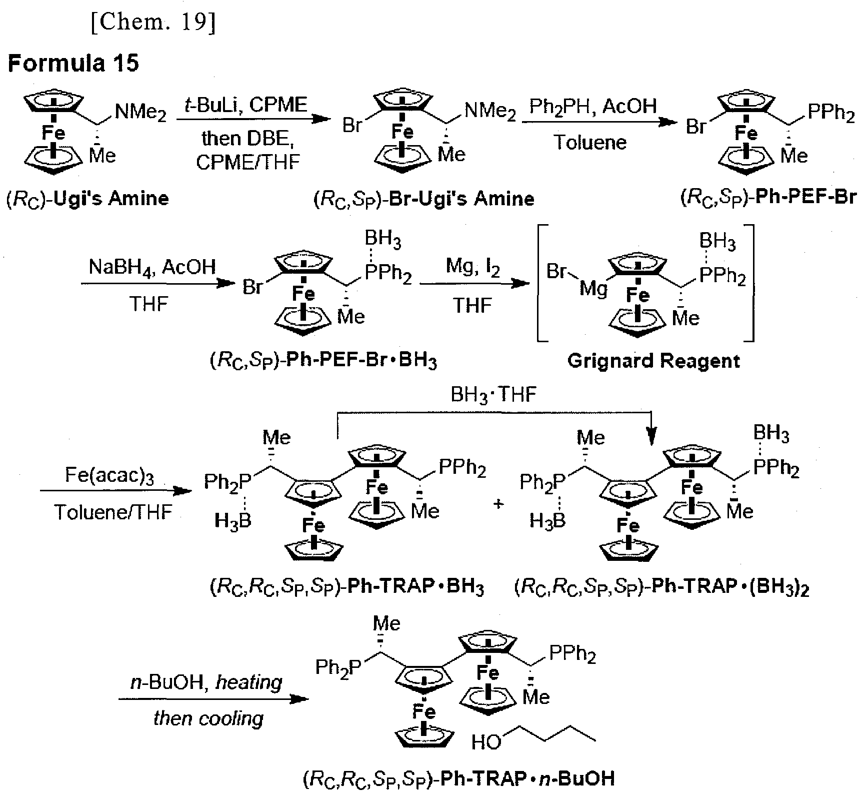

Using (Rc)-Ugi's amine as a starting material, a series of syntheses was carried out according to the procedures described in Example 1, producing 2.29 g of the desired (R_{C},R_{C},S_{P},S_{P})-Ph-TRAP·(BH₃)₂ as an air-stable orange powder. Purity: 86.7% by weight (the main impurity was chloroform). A 2.0 g of portion of the present compound was reacted with n-BuOH according to the procedures described in Example 3. The reaction solution was then crystallized, and the filtered crystals were dried by heating at 60°C under reduced pressure of 1 Torr for 1 hour, successfully producing 1.60 g of the desired (R_{C},R_{C},S_{P},S_{P})-Ph-TRAP·n-BuOH as an air-stable orange powder. Purity as Ph-TRAP: 93.8% by weight; n-BuOH content relative to Ph-TRAP: 71 mol%; Isolated Yield: 89.6%. NMR analysis results of the present alcohol solvate were essentially identical to those of (S_{C},S_{C},R_{P},R_{P})-Ph-TRAP·n-BuOH produced in Example 3, except for the difference in n-BuOH content. Single crystals of (R_{C},R_{C},S_{P},S_{P})-Ph-TRAP·n-BuOH were successfully prepared by a cooling method using n-BuOH as a solvent.

FIG. 3 shows the result of X-ray crystallography (thermal ellipsoid plot; 50% probability level) of (R_{C},R_{C},S_{P},S_{P})-Ph-TRAP·n-BuOH produced in Example 4. The result clearly confirmed that the present alcohol solvate is indeed an enantiomer of (S_{C},S_{C},R_{P},R_{P})-Ph-TRAP·n-BuOH, produced in Example 3. The key parameters ensuring the reliability of the crystallographic analysis are summarized below; Chemical Formula: C₅₂H₅₄Fe₂OP₂; Crystal System: Orthorhombic; Space Group: P2₁2₁2₁ (#19); Lattice Constants: a = 11.7028(2) Å, b = 13.7834(2) Å, c = 26.4066(3) Å, α = β = γ = 90°; R₁: 0.0453; wR₂: 0.0911; GOF: 1.045; Flack Parameter: -0.013(3).

The results of Example 3 and Example 4 demonstrated that (S_{C},S_{C},R_{P},R_{P})-Ph-TRAP·R^{A}OH and (R_{C},R_{C},S_{P},S_{P})-Ph-TRAP·R^{A}OH, which are the preferred forms of optically active Ph-TRAP·R^{A}OH (1·A) according to the present invention, can be readily and selectively produced by using Ph-TRAP·(BH₃)₂ (1·(BH₃)₂), synthesized from the optically active form of Ugi's Amine, as a starting material in the production method of the present invention.

### [Example 5] Thermal Stability Test of (S_{C},S_{C},R_{P},R_{P})-Ph-TRAP·n-BuOH

(S_{C},S_{C},R_{P},R_{P})-Ph-TRAP·n-BuOH prepared in Example 3 (n-BuOH content: 82 mol% relative to Ph-TRAP) was weighed out in portions of approximately 100 mg into Schlenk tubes. After heating at a specified temperature and pressure for 1 hour, the samples were cooled to room temperature and examined for changes in appearance. Subsequently, a portion of each sample was dissolved in deuterated chloroform, and the n-BuOH content thereof was determined by performing ¹H NMR measurements on the resulting solutions. These results are summarized Table 1 below (for reference, the n-BuOH content in the single crystal of (S_{C},S_{C},R_{P},R_{P})-Ph-TRAP·n-BuOH is also shown as Entry No. 1).

**[Table 1]**

| Entry No. | 1 | 2 | 3 | 4 | 5 | 6 | 7 | 8 | 9 | 10 |
|---|---|---|---|---|---|---|---|---|---|---|
| Temperature (°C) | r. t. | r. t. | 40 | 50 | 60 | 70 | 80 | 90 | 100 | 110 |
| Pressure (Torr) | 760 | 760 | 1 | 1 | 1 | 1 | 1 | 1 | 1 | 1 |
| Appearance | Single Crystal | Powder | Powder | Powder | Powder | Powder | Powder | Powder | Powder | Amorphous |
| n-BuOH (mol%) | 100 | 82 | 75 | 65 | 51 | 50 | 49 | 41 | 34 | 19 |

The results summarized in Table 1 clearly demonstrated that: 1) (S_{C},S_{C},R_{P},R_{P})-Ph-TRAP·n-BuOH is a crystalline alcohol solvate exhibiting efflorescent properties (Entries No. 1 and 2); 2) heating this solvate under reduced pressure promotes efflorescence, resulting in the loss of n-BuOH from its crystal structure (Entries No. 3 to 10); 3) as efflorescence of the crystalline solvate progresses and the n-BuOH content decreases to below 20 mol%, the crystal structure collapses and the solvate is transformed into an amorphous form (Entry No. 10); and 4) the solvate remains stable in crystalline form when the n-BuOH content within the range of at least 34 to 100 mol% relative to the amount of Ph-TRAP (Entries No. 1 to 9).

### [Example 6] Production of (S_{C},S_{C},R_{P},R_{P})-Ph-TRAP·n-BuOH using a crude solution of (S_{C},S_{C},R_{P},R_{P})-Ph-TRAP·(BH₃)₂ (1·(BH₃)₂) (Formula 16)

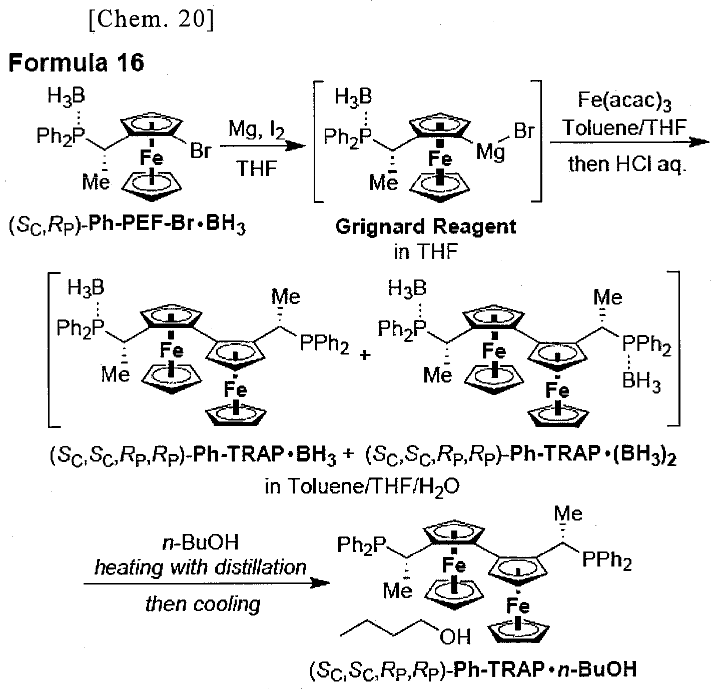

[Setup and Reaction (1)] This step was carried out according to the procedure described in Steps 4 and 5 of Example 1, with the reaction scale increased fivefold. Specifically, a 300 mL, four-necked, round-bottomed flask was charged with metallic magnesium (520 mg, 21.4 mmol, 1.05 equivalents), equipped with a magnetic stirring bar, dropping funnel, Dimroth condenser, and a three-way stopcock, then evacuated and backfilled with nitrogen. Dehydrated THF (2.6 mL) and iodine (26 mg, 0.5 mol%) were sequentially added to the flask, and the mixture was then stirred gently at room temperature for 15 minutes. To the resulting white suspension, a solution of (S_{C},R_{P})-Ph-PEF-Br·BH₃, separately synthesized according to the procedure described in Step 1 to 3 of Example 1 (10.0 g, 20.4 mmol, 1.0 equivalent) in dehydrated THF (40 mL) was added in one portion. The suspension was stirred under reflux while being heated using an oil bath set at 80°C for 1 hour, affording a solution of the desired Grignard reagent (<20.4 mmol) as a deep-red liquid. A solution of Fe(acac)₃ (7.56 g, 21.4 mmol, 1.05 equivalents) in dehydrated toluene (76 mL) was charged into the dropping funnel, and then added dropwise to the stirred reaction solution under reflux over 2 minutes. The resulting mixture was further stirred under reflux for 30 minutes while being heated using an oil bath set at 100°C.

[Post-Treatment] The obtained reaction solution was allowed to cool to 40°C, followed by the addition of degassed 2N hydrochloric acid (51 mL, 102.0 mmol, 5 equivalents). The biphasic mixture was stirred at 40°C for 15 minutes, allowed to stand, and the aqueous layer was then removed under a nitrogen atmosphere. The remaining organic layer was washed twice with degassed water (50 mL), affording a crude solution of the desired (S_{C},S_{C},R_{P},R_{P})-Ph-TRAP·(BH₃)₂ (<10.2 mmol) as a red liquid. Despite the presence of Ph-TRAP·BH₃, which is a diphosphine-monoborane complex as a byproduct, the crude solution was used in the next step as is, while being stored in the reaction flask filled with nitrogen.

[Setup and Reaction (2)] After adding degassed n-BuOH, a type of alcohol described herein (80 mL), to the crude solution of (S_{C},S_{C},R_{P},R_{P})-Ph-TRAP·(BH₃)₂ (<10.2 mmol, 1.0 equivalent), a Claisen distillation apparatus was attached to the flask. The resulting mixture was stirred and heated using an oil bath set at 130°C. The solvent was distilled off under nitrogen stream at atmospheric pressure, and approximately 150 mL of the solvent was recovered. The concentrated reaction solution thus obtained was further stirred for 1 hour under reflux while being heated using an oil bath set at 130°C.

[Post-Treatment, Isolation and Purification] The concentrated reaction solution was allowed to cool to 80°C and then stirred for 30 minutes under a nitrogen atmosphere. The resulting orange slurry was cooled to 0°C using an ice-water bath, followed by suction filtration using a Kiriyama funnel under nitrogen stream. The filtered crystals were washed four times with degassed n-BuOH cooled to 0°C (10 mL), and then dried by heating at 60°C under reduced pressure of 1 Torr for 3 hours, producing 6.70 g of the desired (S_{C},S_{C},R_{P},R_{P})-Ph-TRAP·n-BuOH as an air-stable orange powder. Purity as Ph-TRAP: 92.8% by weight; n-BuOH content relative to Ph-TRAP: 73 mol%; Overall Yield from (S_{C},R_{P})-Ph-PEF-Br·BH₃: 76.7%. NMR analysis results of (S_{C},S_{C},R_{P},R_{P})-Ph-TRAP·n-BuOH produced by this method were essentially identical to those obtained in Example 3, except for the difference in the n-BuOH content.

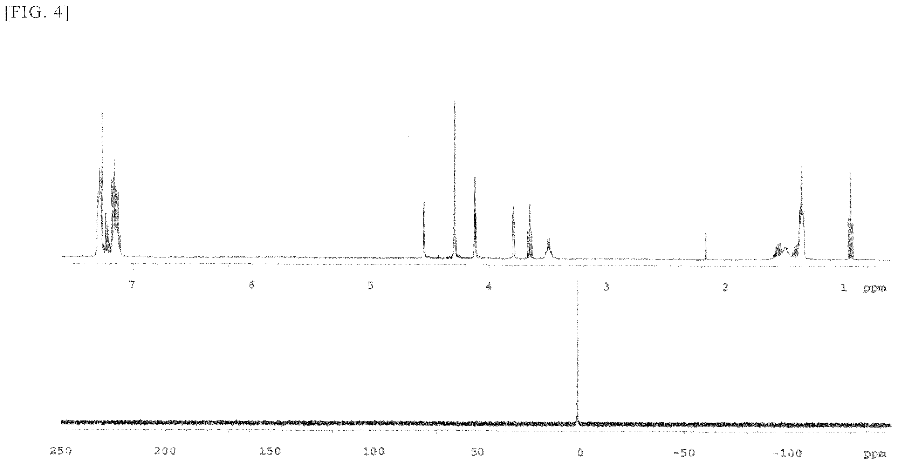

Approximately 10 mg of (S_{C},S_{C},R_{P},R_{P})-Ph-TRAP·n-BuOH, produced on a preparative scale in Example 6, was weighed out into a glass sample tube, which was plugged with cotton and left in air at room temperature for 3 months. Thereafter, visual inspection and NMR analysis of the air-exposed sample showed results that were essentially identical to those obtained immediately after production. FIG. 4 shows the ¹H NMR (left side) and ³¹P NMR (right side) spectrum charts of (S_{C},S_{C},R_{P},R_{P})-Ph-TRAP·n-BuOH, measured in deuterated chloroform after being exposed to air at room temperature for 3 months.

The results of Example 6 demonstrated that (S_{C},S_{C},R_{P},R_{P})-Ph-TRAP·n-BuOH, a particularly preferred form of optically active Ph-TRAP·R^{A}OH (1·A), can be efficiently produced by reacting its precursor, (S_{C},S_{C},R_{P},R_{P})-Ph-TRAP·(BH₃)₂, with n-BuOH without isolation or purification. Furthermore, the present compound was found to be a remarkably stable crystalline alcohol solvate that does not undergo decomposition even when left in air at room temperature for an extended period.

### Industrial Applicability

Ph-TRAP·R^{A}OH (1·A) according to the present invention can be readily produced without using the synthetically challenging Ph-TRAP (1) itself, by reacting Ph-TRAP·(BH₃)₂ (1·(BH₃)₂) with R^{A}OH (A). Furthermore, according to a preferred embodiment of the present invention, Ph-TRAP·R^{A}OH (1·A) offers advantages such as remarkable crystallinity and air stability, as well as ease of isolation, purification, and long-term storage. Accordingly, the present invention can contribute to the practical application and further improvement in efficiency of the asymmetric hydrogenation of aromatics, which is the catalytic reaction useful for the production of optically active cyclic compounds.

## Claims

1. A crystalline alcohol solvate consisting of 2,2"-bis[1-(diphenylphosphino)ethyl]-1,1"-biferrocene (Ph-TRAP) represented by the following planer structural formula (1) 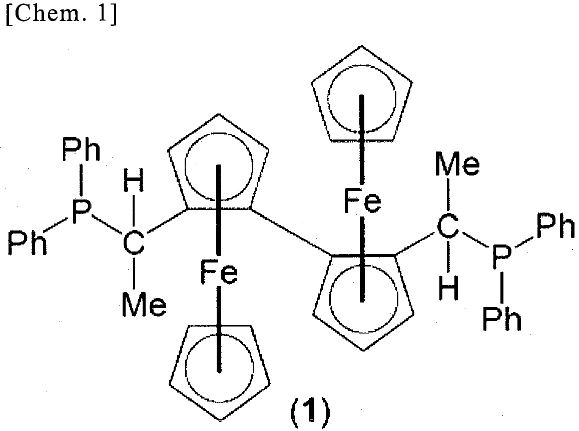 [Wherein,
a solid line represents a single bond;
H represents a hydrogen atom, C represents a carbon atom, and P represents a phosphorus atom;
Me represents a methyl group, and Ph represents a phenyl group;
Fe represents a divalent iron ion, a pentagon containing a circle represents a cyclopentadienyl anion, and a bold line represents six-electron donation of the cyclopentadienyl anion to Fe.]
and an alcohol represented by the following general formula (A). 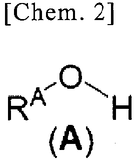 [Wherein,
a solid line represents a single bond;
H represents a hydrogen atom, and O represents an oxygen atom;
R^{A} represents a hydrocarbyl group.]

2. The crystalline alcohol solvate according to claim 1, wherein Ph-TRAP is an optically active form.

3. The crystalline alcohol solvate according to claim 2, wherein R^{A} is selected from the group consisting of an alkyl group having 1 to 6 carbon atoms and a cycloalkyl group having 3 to 6 carbon atoms.

4. The crystalline alcohol solvate according to claim 3, wherein R^{A} is selected from the group consisting of an n-propyl group and an n-butyl group.

5. The crystalline alcohol solvate according to claim 4, wherein the content of the alcohol represented by general formula (A) ranges from 30 to 100 mol% relative to Ph-TRAP.

6. A production method of the crystalline alcohol solvate according to any one of claim 1 to 5, comprising a reaction of {µ-[2,2"-bis[1-(diphenylphosphino-κP)ethyl]-1,1"-biferrocene]}hexahydrodiboron (Ph-TRAP·(BH₃)₂) represented by the following planer structural formula (1·(BH₃)₂) 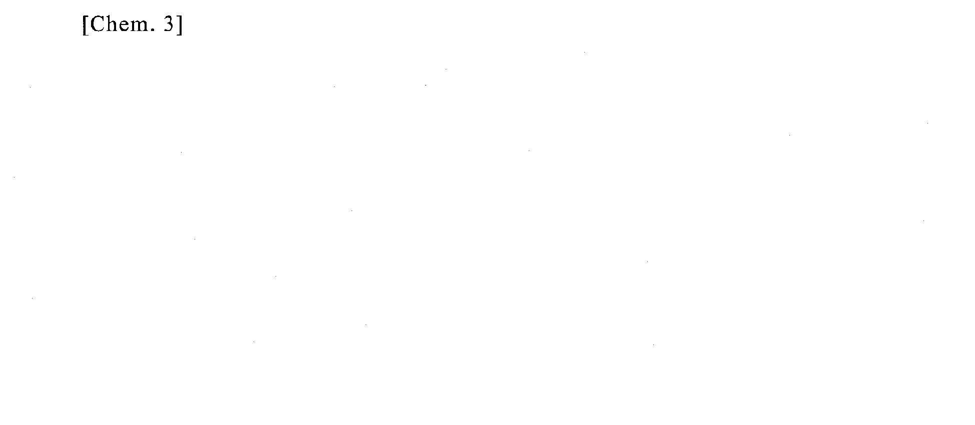 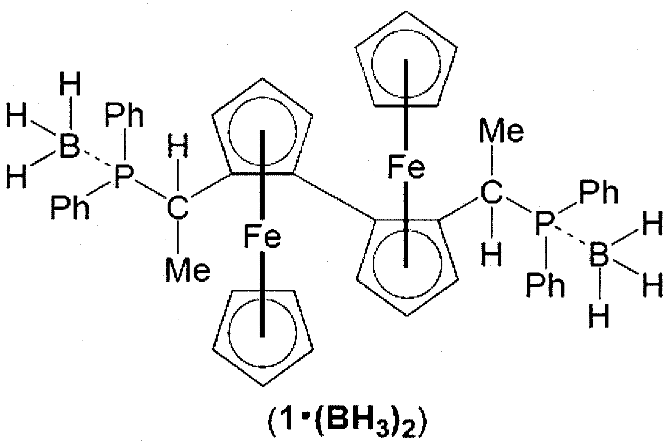 [Wherein,
a solid line represents a single bond, and a dashed line represents a coordinate bond;
H represents a hydrogen atom, B represents a boron atom, C represents a carbon atom, and P represents a phosphorus atom;
Me represents a methyl group, and Ph represents a phenyl group;
Fe represents a divalent iron ion, a pentagon containing a circle represents a cyclopentadienyl anion, and a bold line represents six-electron donation of the cyclopentadienyl anion to Fe.]
with an alcohol represented by the following general formula (A). 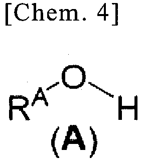 [Wherein,
a solid line represents a single bond;
H represents a hydrogen atom, and O represents an oxygen atom;
R^{A} represents a hydrocarbyl group.]

7. The production method according to claim 6, wherein Ph-TRAP·(BH₃)₂ is an optically active form.

8. The production method according to claim 7, wherein R^{A} is selected from the group consisting of an alkyl group having 1 to 6 carbon atoms and a cycloalkyl group having 3 to 6 carbon atoms.

9. The production method according to claim 8, wherein R^{A} is selected from the group consisting of an n-propyl group and an n-butyl group.
